# EUROPEAN PATENT SPECIFICATION

(11) **EP 2 800 452 B1**
(45) Date of publication and mention of the grant of the patent: **13.07.2016**
(21) Application number: 12861757.8
(22) Date of filing: 26.12.2012
(51) Int. Cl.: H05B 6/02, H05B 6/36, H05B 6/10

(54) **HEATING APPARATUS AND HEATING METHOD**
HEIZVORRICHTUNG UND HEIZVERFAHREN
APPAREIL ET PROCÉDÉ DE CHAUFFAGE

(30) Priority: 28.12.2011 KR 20110144622
(43) Date of publication of application: 05.11.2014
(73) Proprietor: Posco, Gyeongsangbuk-do 790-300 (KR)
(72) Inventor: PARK, Jong-Soo, Daejeon 306-710 (KR); BAE, Jin-Su, Pohang-si Kyungsangbook-do 790-360 (KR); HA, Tae-Jong, Pohang-si Kyungsangbook-do 790-360 (KR); CHO, Un-Kwan, Pohang-si Kyungsangbook-do 790-360 (KR); SHIN, Geon, Pohang-si Kyungsangbook-do 790-360 (KR); OH, Ki-Jang, Pohang-si Kyungsangbook-do 790-360 (KR); LEE, Duk-Man, Pohang-si Kyungsangbook-do 790-360 (KR)
(74) Representative: Zech, Stefan Markus
(86) International application number: PCT/KR2012/011440
(87) International publication number: WO 2013/100544

(56) References cited:
- EP-A1- 1 148 762
- JP-A- H08 153 577
- JP-A- 2000 015 319
- JP-A- 2006 294 396
- JP-A- 2010 257 894
- JP-A- 2010 257 894
- US-A1- 2007 194 010
- US-A1- 2007 235 446

## Description

### [Technical Field]

The present disclosure relates to a heating apparatus and a method of use thereof, and more particularly, a heating apparatus and method for heating a metal plate continuously fed thereto while overheating edge regions of the metal plate and uniformly heating the remaining region of the metal plate.

### [Background Art]

JP 2010 257894 A discloses an induction heating device of a transverse type, comprising a pair of induction coils arranged facing each other so as to sandwich a metal plate with a gap from the metal plate in the direction of the thickness of the metal plate to be heated. Transverse Flux Induction Coils (TFICs) are induction heating coils developed based on Longitudinal Flux Induction Coils (LFICs).

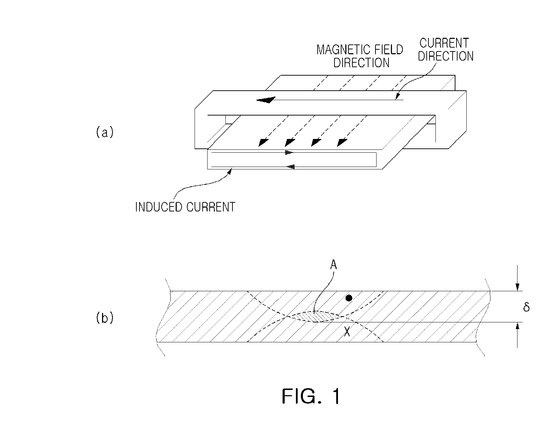

FIGS. 1A and 1B are views illustrating how a metal plates are heated by LFICs.

Referring to FIG. 1A, the LFIC generates a magnetic field in a longitudinal direction with respect to the metal flux, and thus eddy currents are generated in cross-sections of the metal plate. For efficiently heating the metal plate using a magnetic field, the thickness of the metal plate may be a distance equal to or three times or more that of the penetration depth (δ = √(1/πfµσ) of the magnetic field. The reason for this is to prevent eddy
currents flowing in opposite directions in upper and lower regions of the metal plate from colliding with each other and cancelling each other out, as illustrated in FIG. 1B.

Therefore, for efficient induction heating by LFICs, the penetration depth of such a magnetic field should be decreased as the thickness of a metal plate is decreased, and for this, a material having a high degree of permeability (µ) and an apparatus having a high operational frequency (f) are necessary.

However, the permeability of a metal is an inherent property which may be difficult to control, and the high operational frequency requirement limits the construction of high-capacity power equipment. Therefore, there is a limit to the induction heating of thin non-magnetic metal plates using LFICs.

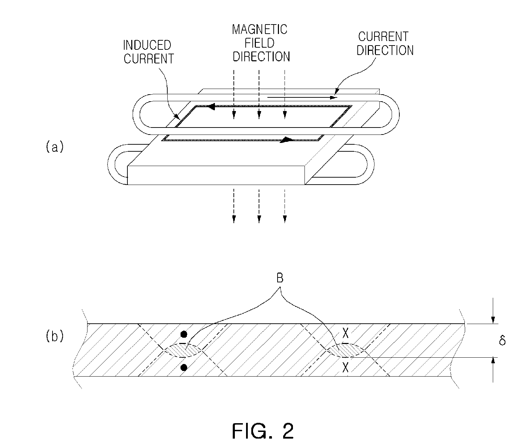

FIGS. 2A and 2B illustrate a TFIC technique. A TFIC may generate a magnetic field in a direction perpendicular to that of a metal plate moving in a transverse direction so as to induce eddy currents in transversal cross-sections having a wide area, and thus the cancelling-out of eddy currents may be prevented. In addition, as the thickness of the metal plate is decreased, more eddy currents flowing in upper and lower regions of the metal plate in the same direction may overlap each other (refer to portions B in FIG. 2B) to increase the current density in the metal plate and thus improve the efficiency of heating (P=I^2*R).

That is, thin non-magnetic metal plates may be induction-heated more efficiently by using TFICs.

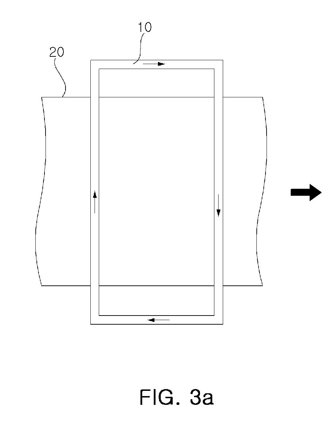

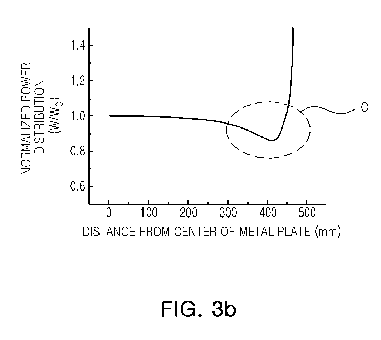

Early TFICs had a simple rectangular shape as illustrated in FIG. 3A. However, such TFICs transfer energy non-uniformly in the width direction of steel sheets. Particularly, the amount of energy transferred to edge regions of a steel sheet adjacent to edges 20 is less than that transferred to the center region of the steel sheet by about 20%, and thus the edge regions are insufficiently heated (refer to portion C in FIG. 3B). In the case of a TFIC proposed to address this problem, heads 10 (both sides) of the TFIC are bent into a circular shape. In addition, the cross-sectional area of the heads 10 is markedly reduced, or the heads 10 are enlarged outwardly into a circular shape, so as to increase the current density of insufficiently-heated regions of a metal plate or extend current paths to edge regions of the metal plate for preventing insufficient heating and realizing widthwise uniform heating.

In this case, however, the position of the TFIC (particularly, the positions of the heads 10 of the TFIC) has to be precisely controlled because the pattern of heating is largely varied according to the distances between ends of the heads 10 and edges of a metal plate. In other words, the TFIC has an optimal position for uniformly heating a metal plate in width direction of the metal plate, and the optimal position of the TFIC is varied according to the width or off-centering of the metal plate. Therefore, the TFIC has to be moved according to variations of the optimal position.

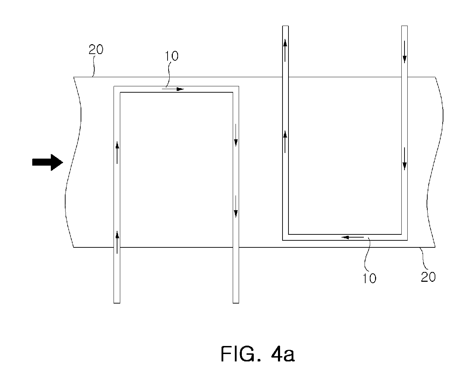

As a result, for the control of coil positions, U-shaped TFICs have been developed by dividing a pair of heating coils as illustrated in FIG. 4A into two pairs of heating coils.

An induction heating system using two pairs of TFICs requires two power supplies, matching elements (such as a condenser and a transformer), and a mechanism for controlling the positions of the TFICs according to width variations and off-centering of a metal plate. In addition, since the shapes or cross-sections of heating coils are varied at heads, coils may have to be manufactured using a welding method. In this case, however, holes may be formed in welded portions due to overheating, and coolant may leak therethrough. That is, induction heating systems using two pairs of TFICs have problems such as difficulties in manufacturing coils, high system complexity, and high initial costs.

### [Disclosure]

### [Technical Problem]

An aspect of the present disclosure may provide a heating apparatus having a simple coil structure, capable of overheating edge regions of a metal plate and uniformly heating the remaining region of the metal plate in the width direction of the metal plate.

Another aspect of the present disclosure may also provide a heating apparatus capable of overheating edge regions of a metal plate and uniformly heating the remaining region of the metal plate in the width direction of the metal plate without using a coil positioning mechanism.

Another aspect of the present disclosure may also provide a heating apparatus and method for overheating edge regions of a metal plate and uniformly heating the remaining region of the metal plate in the width direction of the metal plate even in the case that the metal plate is off-centered.

### [Technical Solution]

The present disclosure provides a heating apparatus and a heating method as described below.

According to an aspect of the present disclosure, a heating apparatus may include: a first heating unit including a coil spaced apart from and disposed to be parallel to a side of a metal plate to heat the metal plate by generating a magnetic field, the coil including a pair of lengthwise parts extending in a width direction of the metal plate and a pair of widthwise parts extending in a moving direction of the metal plate; and a second heating unit including a coil spaced apart from and disposed to be parallel to the other side of the metal plate, the coil including a pair of lengthwise parts extending in the width direction of the metal plate and a pair of widthwise parts extending in the moving direction of the metal plate, wherein each of the first and second heating units may further include magnetic cores extending along the pair of lengthwise parts, and the magnetic cores may include first members extending along inner surfaces of the pair of lengthwise parts.

The coils may have a rectangular shape elongated in the width direction of the metal plate, the magnetic cores may include: a front magnetic core disposed in a forward direction in the moving direction of the metal plate; and a rear magnetic core disposed in a rear direction in the moving direction of the metal plate.

The magnetic cores further include second members disposed on surfaces of the coils opposite to the metal plate.

The second members of the magnetic cores include extensions and are longer than the first members of the magnetic cores in the width direction of the metal plate, and the extensions extend to ends of the coils in the width direction of the metal plate.

The heating apparatus may further include a magnetic field shield box accommodating the coils and the magnetic cores so as to prevent leakage of a magnetic field generated by the coils.

The magnetic cores may be formed by sintering powder formed of a material having a high relative permeability of 1000 or greater, or formed by stacking electrical steel sheets having a relative permeability of 1000 or greater in a length direction thereof, so as to minimize core loss.

Insulation plates may be disposed between the magnetic cores and the coils, and heat-dissipating plates may be disposed on outer sides of the magnetic cores. The heat-dissipating plates may be water-cooling heat-dissipating plates having a shape corresponding to a shape of the magnetic cores, and a water-cooling coil may be arranged on outer sides of the heat-dissipating plates.

The heating apparatus may further include a magnetic field shield box accommodating the coils and the magnetic cores so as to prevent leakage of a magnetic field formed by the coils, wherein the coils, the insulation plates, the magnetic cores, and the heat-dissipating plates may be fixed to a base using coupling parts in the magnetic field shield box.

The magnetic cores may be formed by sintering powder formed of a material having a high relative permeability of 1000 or greater, and the powder may have a particle diameter equal to or less than a penetration depth of a magnetic field.

The magnetic cores may be formed by stacking electrical steel sheets having a relative permeability of 1000 or greater in the length direction thereof, and the electrical steel sheets may have a thickness equal to or less than a penetration depth of a magnetic field.

The magnetic cores may be formed by stacking the electric steel sheets in the length direction thereof by using adhesive layers, and the electrical steel sheets may have a volume fraction of 95% or greater in the magnetic cores for obtaining a uniform heating pattern in the width direction of the metal plate.

Parts of the magnetic cores disposed on inner lengthwise sides of the coils may have a length greater than 80% of a width of the metal plate but less than 120% of the width of the metal plate.

The magnetic field shield box may have a thickness greater than a penetration depth of a magnetic field, and a distance between the coils and an inner surface of the magnetic field shield box may be greater than a distance between the coils and the metal plate so as to reduce induced current loss in the magnetic field shield box.

According to another aspect of the present disclosure, a rolling line may include: the heating apparatus; and a rolling mill disposed behind the heating apparatus.

According to another aspect of the present disclosure, there is provided a method of heating a metal plate continuously fed into a heating apparatus disposed on both sides of the metal plate, the method including: feeding a metal plate into the heating apparatus; and heating the metal plate by generating a magnetic field in a direction perpendicular to the metal plate by using a coil of the heating apparatus, wherein the heating of the metal plate may be performed by adjusting density of the magnetic field using a magnetic core to overheat edge regions of the metal plate as compared with a center region of the metal plate and to uniformly heat the center region of the metal plate for obtaining a uniform widthwise temperature distribution in the center region of the metal plate.

The heating of the metal plate may be performed prior to a rolling process so as to feed the heated metal plate to the rolling process. Since the edge regions of the metal plate are significantly cooled in the rolling process, the edge regions of the metal plate may be overheated prior to the rolling process. The remaining region of the metal plate may be uniformly heated for obtaining a product having uniform quality after the rolling process.

### [Advantageous Effects]

According to the present disclosure, the heating apparatus having a simple coil structure can overheat edge regions of a metal plate and uniformly heat the remaining region of the metal plate in the width direction of the metal plate.

In addition, according to the heating apparatus and method of the present disclosure, edge regions of a metal plate can be overheated, and the remaining region of the metal plate can be uniformly heated in the width direction of the metal plate by using a simple structure without using a coil positioning mechanism.

### [Description of Drawings]

FIGS. 1A and 1B are views illustrating a longitudinal flux induction coil (LFIC) of the related art.
FIGS. 2A and 2B are views illustrating a transverse flux induction coil (TFIC) of the related art.
FIGS. 3A and 3B are views illustrating an exemplary TFIC of the related art, FIG. 3A being a plan view illustrating a coil and a metal plate, FIG. 3B being a power distribution graph of the metal plate heated using the TFIC.
FIGS. 4A and 4B are views illustrating another exemplary TFIC of the related art, FIG. 4A being a plan view illustrating a coil and a metal plate, FIG. 4B being a power distribution graph of the metal plate heated using the TFIC.
FIG. 5A is a graph illustrating eddy current density distribution in a metal plate heated using the TFIC of explained with reference to FIGS. 3A and 3B, and FIG. 5B is a view showing paths of eddy currents induced in the metal plate illustrated in FIG. 5A.
FIG. 6 is a perspective view illustrating a transverse flux induction heater according to an embodiment of the present disclosure.
FIGS. 7A and 7B are a perspective view and a plan view illustrating a coil of a heating unit of the transverse flux induction heater according to the embodiment of the present disclosure.
FIGS. 8A to 8D are a perspective view, a side view, a front view, and a plan view illustrating magnetic cores of the heating unit of the transverse flux induction heater according to the embodiment of the present disclosure.
FIGS. 9A and 9B are an exploded perspective view and a cross-sectional view illustrating the heating unit according to the embodiment of the present disclosure.
FIGS. 10A to 10C are views illustrating the positions of magnetic cores in comparative examples and a first inventive examples.
FIG. 11 is a graph showing power distributions according to the positions of the magnetic cores of FIGS. 10A to 10C.
FIG. 12 is a view illustrating the positions of magnetic cores in first to third inventive examples.
FIG. 13 is a graph showing power distributions according to the positions of the magnetic cores of FIG. 12.
FIG. 14 is a graph showing a power distribution in the third example and a power distribution in the related.
FIG. 15A is a plan view illustrating a heating apparatus according to an embodiment of the present disclosure.
FIG. 15B is a graph showing power distributions according to the length of a magnetic core of the heating apparatus of the embodiment of the present disclosure.
FIG. 16 is a cross-sectional view illustrating a heating apparatus according to an embodiment of the present disclosure.
FIGS. 17A and 17B are graphs showing power distributions according to the off-centering of a metal plate.
FIG. 18 is a graph showing a power distribution in a metal plate heated using a transverse flux induction heater of the present disclosure.
FIG. 19 is a schematic view illustrating a rolling line in which a heating apparatus is disposed according to an embodiment of the present disclosure.

### [Best Mode]

Hereinafter, exemplary embodiments of the present disclosure will be described in detail with reference to the accompanying drawings.

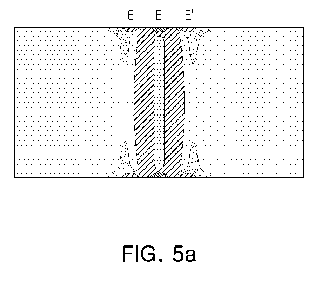

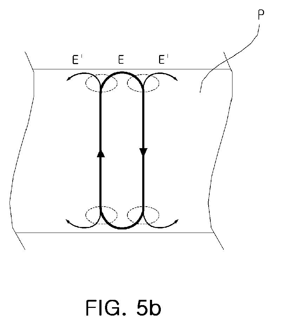

FIG. 5A is a graph illustrating eddy current density distribution in a metal plate heated using a transverse flux induction coil (TFIC) illustrated in FIGS. 3A and 3B, and FIG. 5B is a view showing paths of eddy currents induced in the metal plate illustrated in FIG. 5A. Referring to FIGS. 5A and 5B, when the TFIC of FIGS. 3A and 3B is used, edge currents are concentrated in edge regions E of the metal plate. The density of eddy currents is increased in the edge regions E due to distortion and concentration of a magnetic field, and this is known as the end effect.

The end effect occurs in edge regions E' located outside of a heating coil as well as the edge regions E located inside of the heating coil. Thus, an outer current path loop as well as a main central current loop is formed as illustrated in FIG. 5B. That is, currents are divided into two in the edge regions, and thus the density of currents is lowered at the dividing points, thereby resulting in insufficiently heated regions.

The insufficiently heated regions may be removed by preventing electromagnetic coupling to the outer edge regions E and concentrating currents in the edge regions E located in the heating coil. That is, it is necessary to preventing current paths from running outward.

Thus, the inventors used magnetic cores to concentrate current paths in a region of a metal plate located inside of a heating coil and thus to concentrate currents in edge regions of the metal plate located inside of the heating coil.

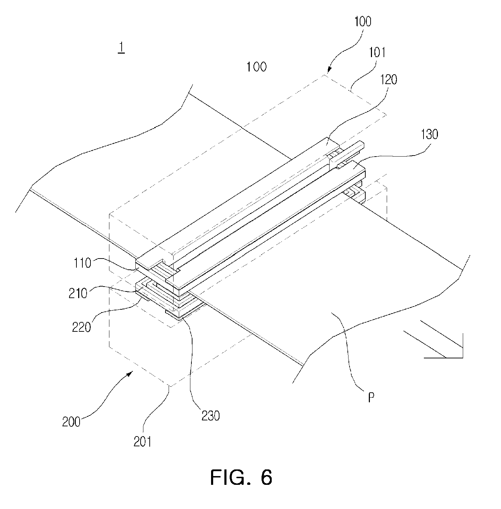

FIG. 6 is a perspective view illustrating a transverse flux induction heater 1 according to an embodiment of the present disclosure. As illustrated in FIG. 6, according to the embodiment of the present disclosure, the transverse flux induction heater 1 includes: an upper heating unit 100 disposed above a metal plate P; and a lower heating unit 200 disposed under the metal plate P.

The upper heating unit 100 includes: a magnetic field shield box 101 preventing leakage of a magnetic field; a coil 110 disposed in the magnetic field shield box 101 to generate a magnetic field in a direction perpendicular to a horizontal surface of the metal plate P; and magnetic cores 120 and 130 covering inner surfaces and a portion of an upper surface of the coil 110 to control the flux density of a magnetic field generated by the coil 110 according to position.

Both sides of the coil 110 extending in the width direction of the metal plate P are defined as a pair of lengthwise parts, and both sides of the coil 110 extending in a moving direction of the metal plate P are defined as widthwise parts. Then, the magnetic cores 120 and 130 are disposed on upper surfaces and inner surfaces of the lengthwise parts.

Similarly, the lower heating unit 200 includes a magnetic field shield box 201, a coil 210 disposed in the magnetic field shield box 201, and magnetic core 220 and 230 covering inner surfaces and a portion of a lower surface of the coil 210.

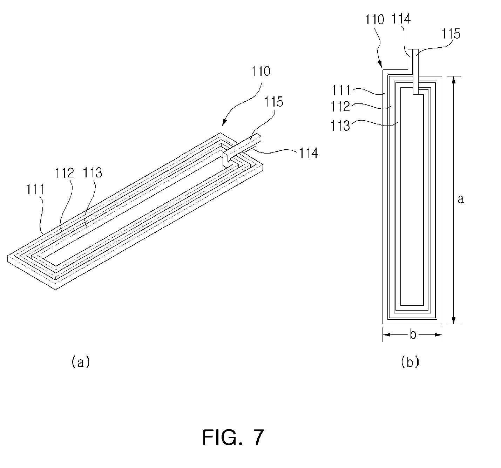

FIGS. 7A and 7B are a perspective view and a plan view including the coil 110 of the upper heating unit 100 of the transverse flux induction heater 1 according to the embodiment of the present disclosure.

The coil 110 is formed of copper having high degrees of thermal conductivity and electric conductivity. The coil 110 is spaced apart from a metal plate moving in a transverse direction by a predetermined distance in the thickness direction of the metal plate. The shape of the coil 110 may be varied according to design. In the embodiment of the present disclosure, for example, the coil 110 may have a rectangular shape elongated in the width direction of the metal plate P and may have a rectangular cross-sectional shape. The coil 110 may include three windings: an outer winding 111, an intermediate winding 112, and an inner winding 113.

The lengthwise parts of the coil 110 have a length (a) in the width direction of the metal plate P, the widthwise parts of the coil 110 have a length (b) in the moving direction of the metal plate P. The outer winding 111 and the inner winding 113 of the coil 110 include connection parts 114 and 115 connected to a power supply.

The distance between the metal plate P and the coil 110 is determined in consideration of variations of the height of the metal plate P so that the coil 110 may not collide with the metal plate P. However, the distance between the metal plate P and the coil 110 may be set to be as small as possible so as to enhance electromagnetic coupling between the metal plate P and the coil 110. For example, if the metal plate P has a thickness of 20 mm, preferably, the distance between the upper coil 110 and the lower coil 210 may be set to be about 80 mm so as to obtain strong electromagnetic coupling while preventing collision. However, the distance between the upper coil 110 and the lower coil 210 may be varied according to design.

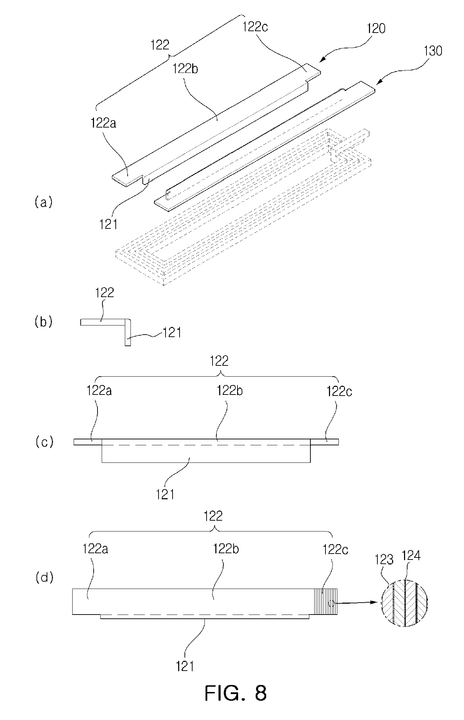

FIG. 8A is a perspective view illustrating the magnetic cores 120 and 130 of the upper heating unit 100 of the transverse flux induction heater 1 according to the embodiment of the present disclosure. FIG. 8B is a side view of the magnetic core 120, FIG. 8C is a front view of the magnetic core 120, and FIG. 8D is a plan view of the magnetic core 120.

Referring to FIG. 8A, in the embodiment of the present disclosure, the magnetic cores 120 and 130 are rear and front magnetic cores in the moving direction of a metal plate P. The rear and front magnetic cores 120 and 130 may have the same shape except for vertical parts 121 varying according to the shape of the connection part 115. The vertical parts 121 of the front and rear magnetic cores 130 and 120 are spaced apart from each other and face each other in the coil 110. However, according to the thicknesses of the magnetic cores 120 and 130 and the width (b) of the coil 110 (refer to FIGS. 7A and 7B), the magnetic cores 120 and 130 may be provided in one piece.

Referring to FIG. 8B, the rear magnetic core 120 includes: the vertical part (first member) 121 covering an inner surface of the coil 110; and a horizontal part (second member) 122 covering an upper surface of the coil 110. The rear magnetic core 120 may have a reversed L-shape. The horizontal part 122 includes a middle part 122b corresponding to the vertical part 121, and extensions 122a and 122c extending from both sides of the vertical part 121 to ends of the coil 110. The vertical part 121 does not include extensions corresponding to the extensions 122a and 122c because the vertical part 121 covers an inner surface of the coil 110. In the embodiment of the present disclosure, the lengthwise parts of the coil 110 are not covered with the magnetic cores 120 and 130 but are exposed to the outside.

As illustrated in an enlarged cross-sectional view in FIG. 8D, the magnetic core 120 of the embodiment may be formed by stacking electrical steel sheets 123 having a high relative permeability of 1000 or greater in the length direction of the magnetic core 120 (that is, in the width direction of a metal plate P). In this case, adhesive layers 124 may be formed between the electrical steel sheets 123. The thickness of the electrical steel sheets 123 may be equal to or less than the penetration depth of a magnetic field induced by the coil 110 so as to prevent core loss. For example, since the penetration depth of a magnetic field into the magnetic cores 120 and 130 is about 0.37 mm at an operational frequency of 1000 Hz, it may be preferable that the thickness of the electrical steel sheets 123 be set to be less than about 0.37 mm.

In the embodiment of the present disclosure, the magnetic cores 120 and 130 may be formed by sintering a material having a high relative permeability of 1000 or greater. In this case, the material may have a particle diameter equal to or less than the penetration diameter of a magnetic field to reduce core loss. For example, since the penetration depth of a magnetic field is about 0.37 mm at an operational frequency of 1000 Hz, it may be preferable that the material have a particle diameter less than about 0.37 mm.

Particularly, when the electrical steel sheets 123 are stacked using the adhesive layers 124, the volume fraction of the electrical steel sheets 123 in the magnetic core 120 may be 95% or greater. If the volume fraction of the adhesive layers 124 is greater than 5%, the function of the magnetic core 120 may deteriorate, and thus a widthwise heating pattern of a metal plate P may be varied.

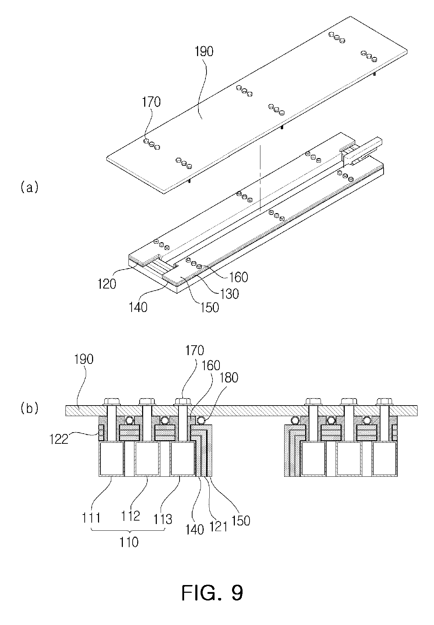

FIGS. 9A and 9B are a perspective view and a cross-sectional view including the magnetic cores 120 and 130 and the coil 110 fixed in the magnetic field shield box 101.

Referring to FIGS. 9A and 9B, the magnetic cores 120 and 130 and the coil 110 are fixed to a base 190 connected to the magnetic field shield box 101. In detail, insulation plates 140 are disposed between the coil 110 and the magnetic cores 120 and 130 to insulate the coil 110 from the magnetic cores 120 and 130 and cool the magnetic cores 120 and 130. Heat-dissipating plates 150 cover upper surfaces of the magnetic cores 120 and 130. The insulation plates 140 and the heat-dissipating plates 150 are formed of materials having a high thermal conductivity.

A water-cooling coil 180 is disposed on the heat-dissipating plates 150 to cool the magnetic cores 120 and 130 heated by a magnetic field generated from the coil 110.

Bushes 160 having a predetermined thickness are disposed between the base 190 and the heat-dissipating plates 150 to form a space therebetween for the water-cooling coil 180. The bushes 160 are connected to the coil 110 through the magnetic cores 120 and 130, the insulation plates 140, and the heat-dissipating plates 150.

The bushes 160 make contact with the base 190, and coupling parts such as bolts 170 penetrating the base 190 are coupled to the bushes 160 so as to fix the insulation plates 140, the heat-dissipating plates 150, and the magnetic cores 120 and 130 to the base 190.

The base 190 to which the coil 110, the insulation plates 140, the heat-dissipating plates 150, and the magnetic cores 120 and 130 are fixed is connected to the magnetic field shield box 101. That is, the coil 110, the insulation plates 140, the heat-dissipating plates 150, and the magnetic cores 120 and 130 are fixed in the magnetic field shield box 101.

One of embodiments of the present disclosure has been described. Hereinafter, examples of magnetic cores having different shapes will be described.

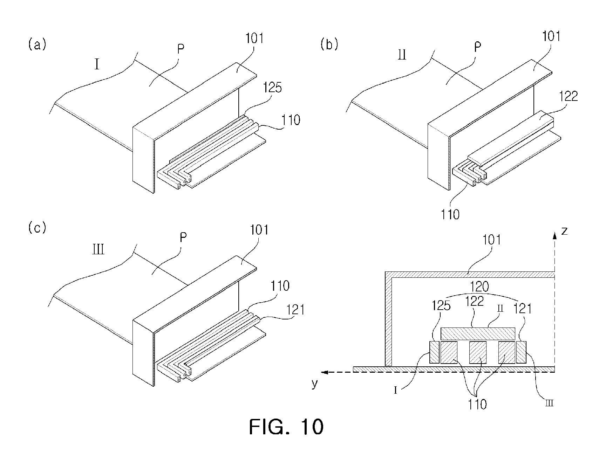

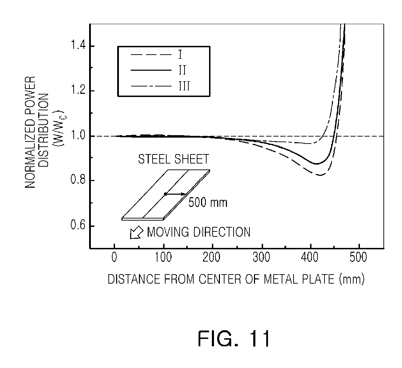

FIGS. 10A to 10C is a view illustrating First Inventive Example III and Comparative Examples I and II, and FIG. 11 is a graph illustrating power distributions in a metal plate P for First Inventive Example III and Comparative Examples I and II.

Referring to FIGS. 10A to 10C, in First Inventive Example III, a magnetic core 120 is constituted by only a vertical part 121 disposed on an inner surface of a coil 110. In Comparative Example I, a magnetic core 120 is constituted by only a vertical part 125 disposed on an outer lateral surface of a coil 110, and in Comparative Example II, a magnetic core 120 is constituted by only a horizontal part 122 disposed on an upper surface of a coil 110.

Except these, the coils 110 have the same structure such as the number turns, pole pitch, and interval. FIG. 11 illustrates heating patterns of a metal plate P after passing through TFICs. Each of the heating patters was obtained through numerical analysis by calculating the integral of joule heat of the metal plate P in the moving direction and the thickness direction of the metal plate P for each widthwise point of the metal plate P.

Referring to FIG. 11, in Comparative Example I, the temperature of the metal plate P is decreased at an edge region like in the related-art case of FIG. 3B in which a magnetic core 120 is not used. That is, an insufficiently heated region is not removed. In Comparative Example II, an insufficiently heated region is slightly reduced. That is, the effect of the magnetic core 120 is insignificant. However, in First Inventive Example III, an insufficiently heated region is sufficiently reduced.

The reason for this is that since the magnetic core 120 is disposed on an inner surface of the coil 110, a magnetic field is concentrated in a region inside of the coil 110. Therefore, main eddy current paths between the (upper) coil 110 and a lower coil 210 are enhanced, and the density of a magnetic field in an outer edge region (refer to E' in FIG. 5) is lowered to prevent the eddy current paths from diverging outwardly. That is, the width of the metal plate P is uniformly heated owing to the magnetic core 120 disposed the inner surface of the coil 110.

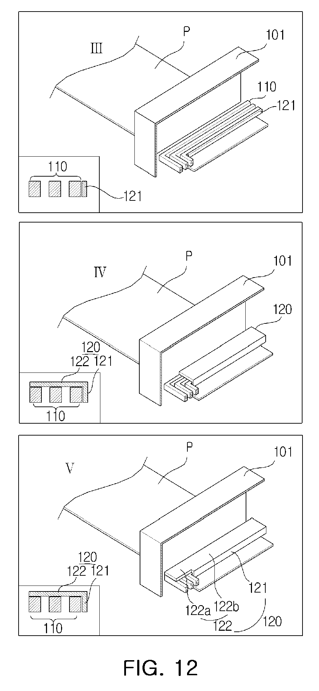

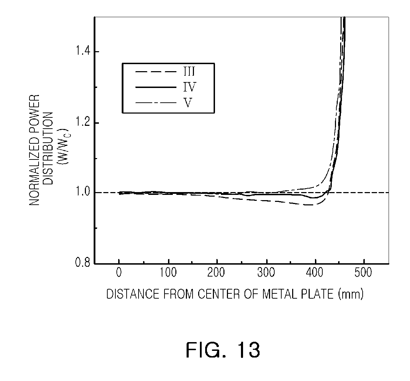

Referring to FIGS. 12 and 13, examples of magnetic cores 120 each covering an inner surface and another surface of a coil are proposed, and power distributions from the center of a metal plate heated using the examples are illustrated in a graph.

Referring to the upper region of FIG. 12, in First Inventive Example III, a magnetic core 120 is constituted by only a vertical part 121 like the magnetic core 120 illustrated in FIG. 10C, and the vertical part 121 covers only an inner surface of a coil 110.

Referring to the middle region of FIG. 12, in Second Inventive example IV, a magnetic core 120 includes: a vertical part 121 covering an inner surface of a coil 110; and a horizontal part 122 having a width corresponding to the width of the vertical part 121 and covering an upper surface of the coil 110. The magnetic core 120 has an approximately reversed L-shape. The sides of the magnetic core 120 facing an outer surface of the coil 110 and a metal plate are opened.

Referring to the lower region of FIG. 12, in Third Inventive Example V, like in Second Inventive Example IV, an magnetic core 120 includes: a vertical part 121 covering an inner surface of a coil 110; and a horizontal part 122 having a width corresponding to the width of the vertical part 121 and covering an upper surface of the coil 110. However, the horizontal part 122 extends to widthwise ends of the coil 110 as described with reference to FIGS. 8A to 8D. Like In Second Inventive Example IV, the sides of the magnetic core 120 facing an outer surface of the coil 110 and a metal plate are opened.

FIG. 13 is a power distribution graph showing heating patterns in First to Third Inventive Examples III to V. Referring to FIG. 13, edge regions of the metal plates are sufficiently heated in First to Third Inventive Examples III to V.

Specifically, Second Inventive Example IV results in an improved heating pattern as compared with First Inventive Example III. Furthermore, Third Inventive Example V results in an improved heating pattern as compared with Second Inventive Example IV.

Particularly, in Third Inventive Example V, an insufficiently heated region having a normalized power value of 1 or less is not prevent, and an edge region is overheated. Therefore, the edge region that will be overcooled in a rolling process after being heated by the upper heating unit 100 may be previously overheated for preventing insufficient heating.

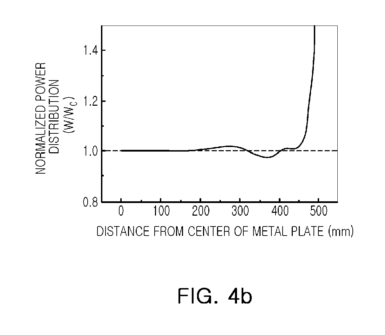

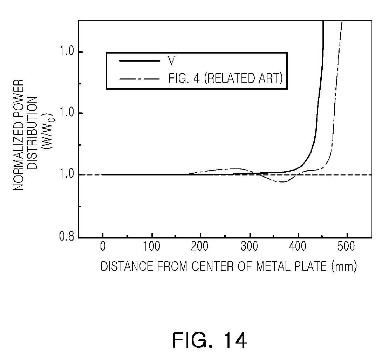

FIG. 14 is a power distribution graph showing a widthwise heating pattern obtained by Third Inventive Example V and a widthwise heating pattern obtained by two pairs of U-shaped TFICs developed by dividing a pair of heating coils into two pairs of heating coils as illustrated in FIG. 4.

Referring to FIG. 14, although the U-shaped TFICs as illustrated in FIG. 4 are proposed to remove an insufficiently heated region, the widthwise heating pattern is unstable. However, in Third Inventive Example V, the widthwise heating pattern is stable.

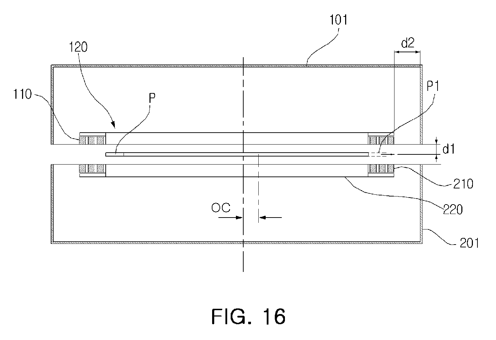

Furthermore, an induction heating system using two pairs of TFICs such as those illustrated in FIG. 4 requires tow power supplies, matching elements (such as a condenser and a transformer), and a mechanism for controlling the positions of TFICs according to width variations and off-centering of a metal plate. However, Inventive Examples of the present disclosure are not sensitive to off-centering. This will be described later in detail with reference to FIGS. 16 to 17B.

In addition, since the shapes or cross-sections of the TFICs are varied at heads 10 (refer to FIG. 4), the TFICs may have to be manufactured using a welding method. In this case, however, holes may be formed in welded portions due to overheating, and coolant may leak therethrough. However, according to the embodiments of the present disclosure, the cross-sectional areas of coils 110 are not varied, and thus the coils 110 may be easily manufactured.

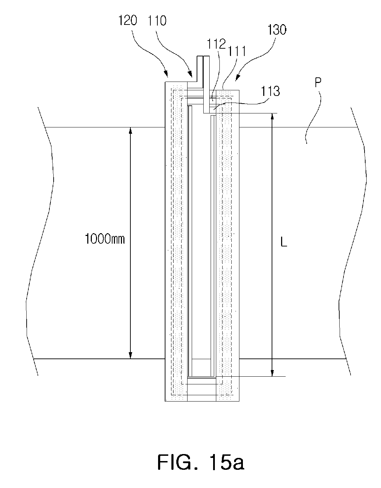

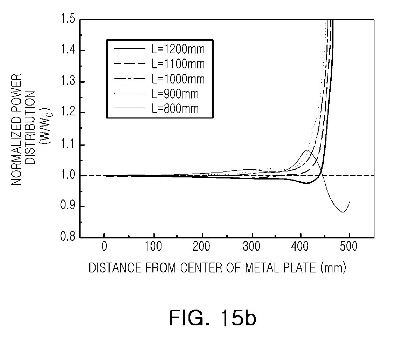

FIGS. 15A and 15B illustrate heating patterns according to a relationship between the width of a metal plate P and the lengths of magnetic cores 120 and 130 of the present disclosure. FIG. 15A is a plan view illustrating a heating unit 100 according to an embodiment of the present disclosure. A coil 110 includes three windings: an outer winding 111, an intermediate winding 112, and an inner winding 113. The (front) magnetic core 130 and the (rear) magnetic core 120 are disposed on inner and upper surfaces of the coil 110.

Each of the magnetic cores 120 and 130 illustrated in FIG. 15A includes a vertical part 121 and a horizontal part 122 like the magnetic cores 120 and 130 illustrated in FIGS. 8A to 8C. The horizontal part 122 includes extensions 122a and 122c. The length of the magnetic cores 120 and 130 means a common length of the horizontal parts 122 and the vertical parts 121. That is, the length of the magnetic cores 120 and 130 means the length L of the vertical part 121 of the magnetic core 130 which is equal to a short length of the inner winding 113 of the coil 110.

FIG. 15B illustrates heating patterns according to the length L of the vertical part 121. As illustrated in FIG. 15B, when the width of the metal plate P is 1000 mm, undesirably, an edge portion of the metal plate P is not overheated if the length L of the magnetic core 130 is 800 mm (80% of the width of the metal plate P). In addition, when the width of the metal plate P is 1000 mm, an insufficiently heated region is increased if the length L of the magnetic core 130 is 1200 mm (120% of the width of the metal plate P). Therefore, when the length L of the magnetic cores 120 and 130 is longer than 80% of the width of the metal plate P but equal to or shorter than 120% of the width of the metal plate P, the edge region of the metal plate P may be overheated and the remaining region of the metal plate P may be uniformly heated.

Referring to FIG. 16, according to an embodiment of the present disclosure, the distance d2 between a magnetic field shield box 101 and a coil 110 may be greater than the distance d1 between the coil 110 and a metal plate P so as to minimize induced current loss in the magnetic field shield box 101.

In addition, the magnetic field shield box 101 may be formed of a metal plate to facilitate magnetic field screening by induced current. In the embodiment of the present disclosure, the magnetic field shield box 101 may be formed of copper. However, the embodiments of the present disclosure are not limited thereto.

To weaken a portion of a magnetic field generated by the coil 110 and leaked to the outside in an amount of 70% or more, the thickness of the magnetic field shield box 101 may be greater than a penetration depth of the magnetic field at a given frequency. For example, since the penetration depth of a magnetic field into copper at an operational frequency of 1100 Hz is 2 mm, it may be preferable that the thickness of the magnetic field shield box 101 be greater than 2 mm.

FIG. 16 illustrates a heating apparatus according to an embodiment of the present disclosure when the metal plate P is off-centered.

Referring to FIG. 16, in the embodiment of the present disclosure, heating units 100 and 200 are disposed above and under the metal plate P, and the metal plate P passes between coils 110 and 210. It is ideal that the metal plate P passes between the coils 110 and 210 with centers thereof being aligned. However, practically, the metal plate P may be off-centered. In this case, if the metal plate P is not heated according to the above-described heating pattern, the heating apparatus may be moved or adjusted according to the off-centering of the metal plate P by using an adjustment mechanism.

An off-center distance OC may be defined as a horizontal distance between the center of the metal plate P and the center of the coils 110 and 210.

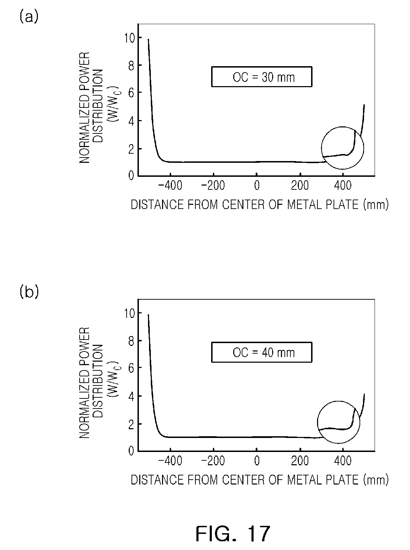

FIGS. 17A and 17B are power distribution graphs illustrating heating patterns with respect to distance for off-center distances of 30 mm and 40 mm. As illustrated in FIGS. 17A and 17B, although the metal plate P is off-centered, edge regions of the metal plate P are overheated and a center region of the metal plate P is uniformly heated by the heating units 100 and 200 of the embodiment. That is, the heating patterns have an approximate U-shape.

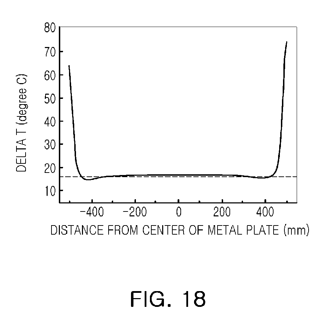

FIG. 18 is a performance graph obtained by actually manufacturing the transverse flux induction heater 1 illustrated in FIG. 6 and performing a performance test thereon according to the embodiment of the present disclosure. In the experimental example, the length L of the magnetic cores 120 and 130 was set to a value corresponding to the width of a metal plate P, and the power capacity of the transverse flux induction heater 1 was 100 kW. In addition, the operational frequency of the transverse flux induction heater 1 was 1100 kHz, and a stainless steel sheet (conductivity=1.1x10⁶ S/m) was used as the metal plate P.

As illustrated in FIG. 18, like the numerical analysis results described above, the transverse flux induction heater 1 overheated edge regions of the metal plate P and uniformly heated a center region of the metal plate P.

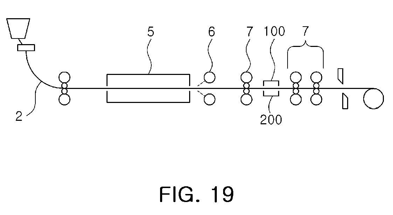

FIG. 19 illustrates a rolling line in which a heating apparatus is disposed according to an embodiment of the present disclosure. Referring to FIG. 19, in the embodiment of the present disclosure, an upper heating unit 100 and a lower heating unit 200 of the heating apparatus are disposed above and under a metal plate (strip) to heat the strip passing therebetween, and the heated strip is fed into a rolling mill 7 for rough rolling or finish rolling.

While exemplary embodiments have been shown and described above, it will be apparent to those skilled in the art that modifications and variations could be made without departing from the spirit and scope of the present disclosure as defined by the appended claims.

In the embodiments of the present disclosure, lengthwise parts and widthwise parts of a coil are parts extending in the width direction of a metal plate and parts extending in a moving direction of the metal plate. The lengthwise parts and the widthwise parts are not limited a straight shape. For example, the lengthwise parts and the widthwise parts may be curved.

For example, in an embodiment of the present disclosure, when a magnetic core covers two or more surfaces of a coil, parts of the magnetic core covering the surfaces of the coil may be provided in one piece or as separate parts.

The heating apparatus of the present disclosure is not limited thereto heating thin plates, but may be used to heat thick metal plates after adjusting the number of turns of the coils, the shape of the coils, and the operational frequency thereof according to the thickness of the metal plates.

## Claims

1. A heating apparatus comprising:
a first heating unit (100) comprising a coil (110) spaced apart from and disposed to be parallel to a side of a metal plate (P) to heat the metal plate (P) by generating a magnetic field, the coil (110) comprising a pair of lengthwise parts extending in a width direction of the metal plate (P) and a pair of widthwise parts extending in a moving direction of the metal plate (P); and
a second heating unit (200) comprising a coil (210) spaced apart from and disposed to be parallel to the other side of the metal plate (P), the coil (210) comprising a pair of lengthwise parts extending in the width direction of the metal plate (P) and a pair of widthwise parts extending in the moving direction of the metal plate (P),
wherein each of the first and second heating units further comprises magnetic cores (120, 130, 220, 230) extending along the pair of lengthwise parts, and
the magnetic cores (120, 130, 220, 230) comprise first members extending along inner surfaces of the pair of lengthwise parts,
wherein the magnetic cores (120, 130, 220, 230) further comprise second members disposed on surfaces of the coils (110, 210) opposite to the metal plate (P),
**characterised in that** the second members of the magnetic cores (120, 130, 220, 230) comprise extensions (122a, 122c) and are longer than the first members of the magnetic cores (120, 130, 220, 230) in the width direction of the metal plate (P).

2. The heating apparatus of claim 1, wherein the magnetic cores comprise:
a front magnetic core disposed in a forward direction in the moving direction of the metal plate; and
a rear magnetic core disposed in a rear direction in the moving direction of the metal plate.

3. The heating apparatus of claim 1 or 2, wherein the extensions (122a, 122c) extend to ends of the coils (110, 210) in the width direction of the metal plate (P).

4. The heating apparatus of one of the preceding claims, further comprising a magnetic field shield box accommodating the coils (110, 210) and the magnetic cores (120, 130, 220, 230) so as to prevent leakage of a magnetic field generated by the coils (110, 210).

5. The heating apparatus of one of the preceding claims, wherein the magnetic cores (120, 130, 220, 230) are formed by sintering powder formed of a material having a high relative permeability of 1000 or greater, or formed by stacking electrical steel sheets having a relative permeability of 1000 or greater in a length direction thereof, so as to minimize core loss.

6. The heating apparatus of one of the preceding claims, wherein insulation plates are disposed between the magnetic cores (120, 130, 220, 230) and the coils (110, 210), and heat-dissipating plates (150) are disposed on outer sides of the magnetic cores (120, 130, 220, 230).

7. The heating apparatus of one of the preceding claims, wherein the heat-dissipating plates are water-cooling heat-dissipating plates having a shape corresponding to a shape of the magnetic cores (120, 130, 220, 230), and a water-cooling coil is arranged on outer sides of the heat-dissipating plates (150).

8. The heating apparatus of claim 5, wherein the magnetic cores (120, 130, 220, 230) are formed by sintering powder formed of a material having a high relative permeability of 1000 or greater, and the powder has a particle diameter equal to or less than a penetration depth of a magnetic field.

9. The heating apparatus of claim 5, wherein the magnetic cores (120, 130, 220, 230) are formed by stacking electrical steel sheets having a relative permeability of 1000 or greater in the length direction thereof, and the electrical steel sheets have a thickness equal to or less than a penetration depth of a magnetic field.

10. The heating apparatus of claim 9, wherein the magnetic cores (120, 130, 220, 230) are formed by stacking the electric steel sheets in the length direction thereof by using adhesive layers, and the electrical steel sheets have a volume fraction of 95% or greater in the magnetic cores (120, 130, 220, 230) for obtaining a uniform heating pattern in the width direction of the metal plate (P).

11. The heating apparatus of claim 2, wherein parts of the magnetic cores (120, 130, 220, 230) disposed on inner lengthwise sides of the coils have a length greater than 80% of a width of the metal plate (P) but equal to or less than 120% of the width of the metal plate (P).

12. The heating apparatus of claim 4, wherein the magnetic field shield box (101) has a thickness greater than a penetration depth of a magnetic field, and
a distance between the coils (110, 210) and an inner surface of the magnetic field shield box (101) is greater than a distance between the coils (110, 210) and the metal plate (P) so as to reduce induced current loss in the magnetic field shield box.

13. A rolling line comprising:
the heating apparatus of one of the preceding claims; and
a rolling mill (7) disposed behind the heating apparatus,
wherein a metal strip heated by the heating apparatus is rolled by the rolling mill (7).

## Patentansprüche

1. Heizvorrichtung, Folgendes aufweisend:
eine erste Heizeinheit (100) mit einer Spule (110), die von einer Seite einer Metallplatte (P) beabstandet und parallel zu dieser angeordnet ist, um die Metallplatte (P) durch Erzeugen eines Magnetfelds zu erhitzen, wobei die Spule (110) ein Paar von der Länge nach verlaufenden Teilen, die sich in einer Breitenrichtung der Metallplatte (P) erstrecken, und ein Paar von der Breite nach verlaufenden Teilen aufweist, die sich in einer Bewegungsrichtung der Metallplatte (P) erstrecken; und
eine zweite Heizeinheit (200) mit einer Spule (210), die von der anderen Seite der Metallplatte (P) beabstandet und parallel zu dieser angeordnet ist, wobei die Spule (210) ein Paar von der Länge nach verlaufenden Teilen, die sich in der Breitenrichtung der Metallplatte (P) erstrecken, und ein Paar von der Breite nach verlaufenden Teilen aufweist, die sich in einer Bewegungsrichtung der Metallplatte (P) erstrecken,
wobei die erste und zweite Heizeinheit darüber hinaus jeweils Magnetkerne (120, 130, 220, 230) aufweist, die sich entlang des Paars von der Länge nach verlaufenden Teilen erstrecken, und
die Magnetkerne (120, 130, 220, 230) erste Elemente aufweisen, die sich entlang von Innenflächen des Paars von der Länge nach verlaufenden Teilen erstrecken,
wobei die Magnetkerne (120, 130, 220, 230) darüber hinaus zweite Elemente aufweisen, die auf der Metallplatte (P) gegenüberliegenden Flächen der Spulen (110, 210) angeordnet sind,
**dadurch gekennzeichnet, dass**
die zweiten Elemente der Magnetkerne (120, 130, 220, 230) Verlängerungen (122a, 122c) aufweisen und in der Breitenrichtung der Metallplatte (P) länger sind als die ersten Elemente der Magnetkerne (120, 130, 220, 230).

2. Heizvorrichtung nach Anspruch 1, wobei die Magnetkerne aufweisen:
einen vorderen Magnetkern, der in einer Vorwärtsrichtung in der Bewegungsrichtung der Metallplatte angeordnet ist; und
einen hinteren Magnetkern, der in einer Rückwärtsrichtung in der Bewegungsrichtung der Metallplatte angeordnet ist.

3. Heizvorrichtung nach Anspruch 1 oder 2, wobei sich die Verlängerungen (122a, 122c) in der Breitenrichtung der Metallplatte (P) zu Enden der Spulen (110, 210) erstrecken.

4. Heizvorrichtung nach einem der vorhergehenden Ansprüche, darüber hinaus einen Magnetfeldabschirmungskasten aufweisend, der die Spulen (110, 210) und die Magnetkerne (120, 130, 220, 230) aufnimmt, um ein Austreten eines durch die Spulen (110, 210) erzeugten Magnetfelds zu verhindern.

5. Heizvorrichtung nach einem der vorhergehenden Ansprüche, wobei die Magnetkerne (120, 130, 220, 230) durch Sintern von Pulver ausgebildet sind, das aus einem Material mit einer hohen relativen Permeabilität von 1000 oder mehr besteht, oder durch Stapeln von elektrischen Stahlblechen mit einer relativen Permeabilität von 1000 oder mehr in einer Längsrichtung von diesen ausgebildet sind, um einen Kernverlust zu minimieren.

6. Heizvorrichtung nach einem der vorhergehenden Ansprüche, wobei Isolierplatten zwischen den Magnetkernen (120, 130, 220, 230) und den Spulen (110, 210) angeordnet sind, und Wärmeableitungsplatten (150) an Außenseiten der Magnetkerne (120, 130, 220, 230) angeordnet sind.

7. Heizvorrichtung nach einem der vorhergehenden Ansprüche, wobei es sich bei den Wärmeableitungsplatten um Wasserkühlungswärmeableitungsplatten mit einer Form handelt, die einer Form der Magnetkerne (120, 130, 220, 230) entspricht, und eine Wasserkühlungsspule an Außenseiten der Wärmeableitungsplatten (150) angeordnet ist.

8. Heizvorrichtung nach Anspruch 5, wobei die Magnetkerne (120, 130, 220, 230) durch Sintern von Pulver ausgebildet sind, das aus einem Material mit einer hohen relativen Permeabilität von 1000 oder mehr besteht, und das Pulver einen Partikeldurchmesser hat, der gleich einer oder kleiner als eine Eindringtiefe eines Magnetfelds ist.

9. Heizvorrichtung nach Anspruch 5, wobei die Magnetkerne (120, 130, 220, 230) durch Stapeln von elektrischen Stahlblechen mit einer relativen Permeabilität von 1000 oder mehr in einer Längsrichtung von diesen ausgebildet sind, und die elektrischen Stahlbleche eine Dicke haben, die gleich einer oder kleiner als eine Eindringtiefe eines Magnetfelds ist.

10. Heizvorrichtung nach Anspruch 9, wobei die Magnetkerne (120, 130, 220, 230) durch Stapeln von elektrischen Stahlblechen in deren Längenrichtung unter Verwendung adhäsiver Schichten ausgebildet sind und die elektrischen Stahlbleche in den Magnetkernen (120, 130, 220, 230) einen Volumenanteil von 95% oder mehr haben, um ein gleichmäßiges Erhitzungsmuster in der Breitenrichtung der Metallplatte (P) zu erzielen.

11. Heizvorrichtung nach Anspruch 2, wobei Teile der Magnetkerne (120, 130, 220, 230), die auf inneren, der Länge nach verlaufenden Seiten der Spulen angeordnet sind, eine Länge haben, die länger als 80% einer Breite der Metallplatte (P), aber gleich oder kürzer als 120% der Breite der Metallplatte (P) ist.

12. Heizvorrichtung nach Anspruch 4, wobei der Magnetfeldabschirmungskasten (101) eine Dicke hat, die größer ist als eine Eindringtiefe eines Magnetfelds, und
ein Abstand zwischen den Spulen (110, 210) und einer Innenfläche des Magnetfeldabschirmungskastens (101) größer ist als ein Abstand zwischen den Spulen (110, 210) und der Metallplatte (P), um einen Induktionsstromverlust im Magnetfeldabschirmungskasten zu reduzieren.

13. Walzstraße, Folgendes aufweisend:
die Heizvorrichtung nach einem der vorhergehenden Ansprüche; und
ein Walzwerk (7), das hinter der Heizvorrichtung angeordnet ist,
wobei ein durch die Heizvorrichtung erhitzter Metallstreifen mittels des Walzwerks (7) gewalzt wird.

## Revendications

1. Appareil de chauffage comprenant :
une première unité de chauffage (100) comprenant une bobine (110) espacée de et disposée pour être parallèle à un côté d'une plaque métallique (P) pour chauffer la plaque métallique (P) en générant un champ magnétique, la bobine (110) comprenant une paire de pièces en longueur s'étendant dans une direction de largeur de la plaque métallique (P) et une paire de pièces en largeur s'étendant dans une direction de déplacement de la plaque métallique (P) ; et
une deuxième unité de chauffage (200) comprenant une bobine (210) espacée de et disposée pour être parallèle à l'autre côté de la plaque métallique (P), la bobine (210) comprenant une paire de pièces en longueur s'étendant dans la direction de largeur de la plaque métallique (P) et une paire de pièces en largeur s'étendant dans la direction de déplacement de la plaque métallique (P),
sachant que chacune de la première et de la deuxième unité de chauffage comprend en outre des noyaux magnétiques (120, 130, 220, 230) s'étendant le long de la paire de pièces en longueur, et
les noyaux magnétiques (120, 130, 220, 230) comprennent des premiers éléments s'étendant le long de surfaces intérieures de la paire de pièces de longueur,
sachant que les noyaux magnétiques (120, 130, 220, 230) comprennent en outre des deuxièmes éléments disposés sur des surfaces des bobines (110, 210) en face de la plaque métallique (P),
**caractérisé en ce que**
les deuxièmes éléments des noyaux magnétiques (120, 130, 220, 230) comprennent des extensions (122a, 122c) et sont plus longs que les premiers éléments des noyaux magnétiques (120, 130, 220, 230) dans la direction de largeur de la plaque métallique (P).

2. L'appareil de chauffage de la revendication 1, sachant que les noyaux magnétiques comprennent :
un noyau magnétique avant disposé dans une direction avant dans la direction de déplacement de la plaque métallique ; et
un noyau magnétique arrière disposé dans une direction arrière dans la direction de déplacement de la plaque métallique.

3. L'appareil de chauffage de la revendication 1 ou 2, sachant que les extensions (122a, 122c) s'étendent à des extrémités des bobines (110, 210) dans la direction de largeur de la plaque métallique (P).

4. L'appareil de chauffage de l'une des revendications précédentes, comprenant en outre une boîte de blindage de champ magnétique logeant les bobines (110, 210) et les noyaux magnétiques (120, 130, 220, 230) de manière à empêcher une fuite d'un champ magnétique généré par les bobines (110, 210).

5. L'appareil de chauffage de l'une des revendications précédentes, sachant que les noyaux magnétiques (120, 130, 220, 230) sont formés par agglomération de poudre constituée d'un matériau ayant une perméabilité relative élevée de 1000 ou plus, ou formés par empilement de feuilles d'acier électrique ayant une perméabilité relative de 1000 ou plus dans une direction de longueur de celles-ci, de manière à minimiser la perte de noyau.

6. L'appareil de chauffage de l'une des revendications précédentes, sachant que des plaques isolantes sont disposées entre les noyaux magnétiques (120, 130, 220, 230) et les bobines (110, 210), et des plaques de dissipation de chaleur (150) sont disposées sur des côtés extérieurs des noyaux magnétiques (120, 130, 220, 230).

7. L'appareil de chauffage de l'une des revendications précédentes, sachant que les plaques de dissipation de chaleur sont des plaques de dissipation de chaleur à refroidissement par eau ayant une forme correspondant à une forme des noyaux magnétiques (120, 130, 220, 230), et une bobine à refroidissement par eau est agencée sur des côtés extérieurs des plaques de dissipation de chaleur (150).

8. L'appareil de chauffage de la revendication 5, sachant que les noyaux magnétiques (120, 130, 220, 230) sont formés par agglomération de poudre constituée d'un matériau ayant une perméabilité relative élevée de 1000 ou plus, et la poudre a un diamètre de particule égal ou inférieur à une profondeur de pénétration d'un champ magnétique.

9. L'appareil de chauffage de la revendication 5, sachant que les noyaux magnétiques (120, 130, 220, 230) sont formés par empilement de feuilles d'acier électrique ayant une perméabilité relative de 1000 ou plus dans la direction de longueur de celles-ci, et les feuilles d'acier électrique ont une épaisseur égale ou inférieure à une profondeur de pénétration d'un champ magnétique.

10. L'appareil de chauffage de la revendication 9, sachant que les noyaux magnétiques (120, 130, 220, 230) sont formés par empilement des feuilles d'acier électrique dans la direction de longueur de celles-ci au moyen de couches adhésives, et les feuilles d'acier électrique ont une fraction de volume de 95% ou plus dans les noyaux magnétiques (120, 130, 220, 230) afin d'obtenir un profil de chauffage uniforme dans la direction de largeur de la plaque métallique (P).

11. L'appareil de chauffage de la revendication 2, sachant que des pièces des noyaux magnétiques (120, 130, 220, 230) disposées sur des côtés de longueur intérieurs des bobines ont une longueur supérieure à 80% d'une largeur de la plaque métallique (P) mais égale ou inférieure à 120% de la largeur de la plaque métallique (P).

12. L'appareil de chauffage de la revendication 4, sachant que la boîte de blindage de champ magnétique (101) a une épaisseur supérieure à une profondeur de pénétration d'un champ magnétique, et
une distance entre les bobines (110, 210) et une surface intérieure de la boîte de blindage de champ magnétique (101) est supérieure à une distance entre les bobines (110, 210) et la plaque métallique (P) de manière à réduire une perte de courant induit dans la boîte de blindage de champ magnétique.

13. Ligne de laminage comprenant :
l'appareil de chauffage de l'une des revendications précédentes ; et
un train de laminage (7) disposé derrière l'appareil de chauffage,
sachant qu'une bande métallique chauffée par l'appareil de chauffage est laminée par le train de laminage (7).
